# EUROPÄISCHE PATENTANMELDUNG

(11) **EP 1 912 406 A2**
(43) Veröffentlichungstag der Anmeldung: **16.04.2008**
(21) Anmeldenummer: 07019346.1
(22) Anmeldetag: 02.10.2007
(51) Int. Cl.: H04L 29/06, H04L 12/22

(54) **Kryptographische Berechnungen für VoIP-Verbindungen**

(30) Priorität: 09.10.2006 DE 102006047650
(71) Anmelder: Giesecke & Devrient GmbH, 81677 München (DE)
(72) Erfinder: Aschauer, Hans, Dr., 81829 München (DE); Bauer, Sven, Dr., 81543 München (DE)

(57) **Zusammenfassung**

Die Erfindung schafft ein Verfahren zum Durchführen kryptographischer Berechnungen für Teilnehmer einer VoIP-Verbindung, wobei die VoIP-Verbindung aufgebaut wird und zumindest ein Teil eines Schlüsselverwaltungsprotokolls durchgeführt wird, das mindestens eine kryptographische Berechnung für die gegenseitige Authentisierung der Teilnehmer und/oder die Erzeugung und/ oder den Austausch von Schlüsseln zwischen den Teilnehmern vorsieht. Die kryptographische Berechnung wird zumindest teilweise in einem mit einem Mikroprozessor-Chip ausgestatteten Sicherheitsmodul durchgeführt. Hierdurch sind die kryptographische Berechnung und die Schlüssel vor Angriffen aus dem der VoIP-Verbindung zu Grunde liegenden IP-Netzwerk und vor Angriffen auf ein Endgerät gesichert.

## Beschreibung

Die Erfindung betrifft ein Verfahren zum Durchführen kryptographischer Berechnungen für die Authentisierung und/ oder die Erzeugung und/ oder den Austausch von Schlüsseln für eine VoIP-Verbindung.

Als kostengünstige Alternative zu herkömmlichen Telefonverbindungen etabliert sich zunehmend die Internet-Protokoll(IP)-basierte Telefonie. Hierbei werden Sprachdaten über eine Internet-Protokoll(IP)-basierte Verbindung übertragen, z.B. über das Internet, oder über eine LAN-Verbindung (LAN= Local Area Network) oder über eine WLAN-Verbindung (WLAN = Wireless LAN). Jedoch auch für Multimediasitzungen im Allgemeinen, wie beispielsweise Videokonferenzen, bieten sich Internet-Protokoll(IP)-basierte Verbindungen an. Neben Sprachdaten können über die Internet-Protokoll(IP)-basierte Verbindung beispielsweise Videodaten übertragen werden, und je nach Bedarf weitere Daten, z.B. Unterlagen für die Teilnehmer an der Multimediasitzung.

Mit dem Begriff VoIP-Verbindung wird jede Art von IP-basierter Sitzung insbesondere Multimediasitzung unter Verwendung von VoIP-Protokollen bezeichnet. Spezialfälle von VoIP-Verbindungen sind Internettelefonie-Verbindungen (IP-basierte Telefonie-Verbindungen).

Die grundlegende Funktionsweise von VoIP ist beispielsweise in einer Studie des Bundesamts für Sicherheit in der Informationstechnik (BSI) eingegangen, "VoIPSEC, Studie zur Sicherheit von Voice over Internet Protocol", Bundesamt für Sicherheit in der Informationstechnik, Oktober 2005, http://www.bsi.bund.de (BSI-Studie), oder in einer Studie des National Institute of Standards and Technology (NIST), "Security Considerations for Voice Over IP Systems", D.R. Kuhn, T.J. Walsh, S. Fries, Januar 2005 (NIST-Studie), beschrieben. Dort sind auch Beispiele von Multimediasitzungen angegeben, insbesondere im Kapitel "2.1.2 VoIP-Anwendungsszenarien" der BSI-Studie. Einzelne Spezifikationen, die für die vorliegende Erfindung von Bedeutung sind, sind beispielsweise die SIP-Spezifikation rfc3261 und die MIKEY-Spezifikation rfc3830.

Bei einer herkömmlichen, leitungsvermittelten Telefonverbindung ist jedes Endgerät an einen festen Port physikalisch angeschlossen, durch den die Authentizität jedes Teilnehmer-Anschlusses gewährleistet ist. Weiter stellt das Telefonnetz den verbundenen Endgeräten einen festen Kanal zur Sprachübertragung zur Verfügung, so dass eine gewisse Vertraulichkeit der Sprachübertragung zwischen den Endgeräten gewährleistet ist.

Bei einer Internet-Protokoll(IP)-basierten Verbindung sind die Teilnehmer, z.B. Anrufer und Angerufener, durch ihre jeweilige IP-Adresse identifiziert, die variieren kann. Die Sprachdatenübermittlung erfolgt paketorientiert und der Verbindung ist kein fester Übertragungskanal zugewiesen. Zu übertragende Daten werden in Pakete aufgeteilt, jedes Paket mit der IP-Adresse des Angerufenen versehen, und die Pakete an die IP-Adresse des Angerufenen versandt, wobei die Übertragungswege der einzelnen Pakete in der Regel unterschiedlich sind.

Im Bild eines mehrschichtigen Protokollmodells (wie z.B. OSI) baut eine VoIP-Verbindung auf dem Internet-Protokoll IP als einer unteren Protokollschicht auf, auf der mehrere VoIP-spezifische Protokolle aufsetzen. Beispiele für VoIP-spezifische Protokolle sind das Protokoll H.323 und die H.323 untergeordneten Transportprotokolle RTP (Real-Time Transport Protocol) für die Echtzeit-Übertragung von Sprach- und Videodaten über paketorientierte Netze und SRTP (Secured RTP) für die verschlüsselte Echtzeit-Übertragung von Sprach- und Videodaten; SIP (Session Initiation Protocol) oder H.323, das letztere mit einem der Unterprotokolle H.225 oder H.245, für die Signalisierung, insbesondere den Verbindungsaufbau; das auf das Signalisierungsprotokoll (z.B. SIP, H.225, H.245) aufsetzende Schlüsselverwaltungsprotokoll MIKEY (Multimedia Internet Keying) oder das auf das Transportprotokoll RTP aufsetzende Schlüsselverwaltungsprotokoll ZRTP für eine Authentisierung zwischen Teilnehmern an einer VoIP-Verbindung, die Erzeugung von Schlüsseln und den Schlüsselaustausch für eine nachfolgende verschlüsselte Verbindung nach SRTP.

Als Endgeräte für VoIP-Verbindungen können beispielsweise verwendet werden: Festnetztelefone ("Hardphones"), Konferenzanlagen, Mobiltelefone und andere mobile Endgeräte wie PDAs, Notebooks mit Mobiltelefonsteckkarte oder -token; oder sogenannte Softphones, d.h. Computer (PCs, Notebooks, PDAs etc.) mit einer integrierten Software-Anwendung mit der Funktionalität eines Telefons im weitesten Sinn, z.B. eines der vorstehend angeführten Endgeräte. Mögliche VoIP-Endgeräte sind beispielsweise in der NIST-Studie im Kapitel "2.VoIP-Equipment" angegeben, oder in der BSI-Studie im Kapitel "3.3.3 VoIP-Endgeräte".

Jede VolP-Verbindung beginnt mit der Signalisierung, bei der ein Anrufer die IP-Adresse eines gewünschten Anzurufenden ermittelt und seine eigene IP-Adresse mitteilt. Die Verbindung zwischen den Endgeräten von Anrufer und Anzurufendem erfolgt über ein oder mehrere Verbindungs-Server, beispielsweise bei SIP über sogenannte Proxy-Server, bei H.323 über sogenannte Gatekeeper. Nach erfolgreicher Signalisierung erfolgt die Übertragung der Sprachdaten und ggf. weiterer Daten, die nun direkt, ohne die Zwischenschaltung von Verbindungs-Servern, erfolgen kann. Je nach Transportprotokoll werden die Daten unverschlüsselt (z.B. bei RTP) oder verschlüsselt übertragen (z.B. bei SRTP).

Falls bei einer VoIP-Verbindung überhaupt eine gegenseitige Authentisierung der Teilnehmer durchgeführt wird, geschieht dies während der Signalisierungsphase. Beispielsweise authentisieren sich die Teilnehmer an einer VoIP-Verbindung gegenseitig über den Austausch von Zertifikaten, Prüfsummen und/ oder Signaturen, die durch kryptographische Berechnungen mit persönlichen Authentisierungsdaten der Teilnehmer erstellt werden. Außerdem tauschen die Teilnehmer in der Signalisierungsphase Schlüssel aus. Als Schlüssel werden beispielsweise Transportschlüssel (z.B. TEK) für die Verschlüsselung von Daten für die nachfolgende Datenübertragung (z.B. nach SRTP) ausgetauscht. Alternativ werden in der Signalisierungsphase Generierungsschlüssel (z.B. TGK) ausgetauscht, aus denen die Teilnehmer nachfolgend Transportschlüssel (z.B. TEK) erzeugen. Ggf. werden die Transportschlüssel ebenfalls in der Signalisierungsphase aus den Generierungsschlüsseln (z.B. TGK) erzeugt. Zum Austausch und zur Erzeugung der Schlüssel sind kryptographische Berechnungen erforderlich.

Die Signalisierung wird gemäß einem Signalisierungsprotokoll durchgeführt, beispielsweise SIP oder H.323, das letztere mit H.225 oder H.245. Die kryptographischen Berechnungen für die Authentisierung und/ oder für die Erzeugung und/ oder den Austausch von Transportschlüsseln werden gemäß einem Schlüsselverwaltungsprotokoll durchgeführt, beispielsweise MIKEY oder ZRTP.

Die kryptographischen Berechnungen für Authentisierung und Austausch und ggf. Erzeugung von Schlüsseln werden derzeit durch die Endgeräte durchgeführt, die an das IP-basierte Netzwerk (z.B. Internet, WLAN, LAN) direkt angeschlossen sind. Schlüssel, die häufig sehr langlebig sind, sind beispielsweise in den Endgeräten abgespeichert. Zwar sind die kryptographischen Berechnungen an sich gesicherte Berechnungen, dennoch sind sie Angriffen aus dem IP-basierten Netzwerk ausgesetzt. Durch Angriffe auf ein Endgerät selbst wird möglicherweise ein Schlüssel unrechtmäßig aus dem Endgerät ausgelesen. Ein nachfolgender Datenverkehr mit auf Grund von solchen Angriffen falsch authentisierten Teilnehmern oder abgehörten oder unrechtmäßig ausgelesenen oder gefälschten Transportschlüsseln ist im Hinblick auf die Sicherheit nicht akzeptabel. Zum Schutz vor Angriffen aus IP-basierten Netzwerken werden bei VoIP Sicherheitsmechanismen des Netzwerkes (z.B. Internet, WLAN, LAN) wie z.B. Firewalls verwendet, die typischerweise auf der Ebene der Einwahl eines Teilnehmers in das Netzwerk ansetzen.

Auf dem Gebiet der Mobilfunkverbindungen wird ein anderes Sicherheitskonzept verwendet. In Mobilfunksystemen wie beispielsweise dem GSM-System authentisiert sich jedes am Mobilfunkverkehr teilnehmende Mobiltelefon gegenüber dem Mobilfunknetz. Beim GSM-System wird zur Authentisierung ein in der SIM-Karte des Mobiltelefons abgespeicherter individueller Kartenschlüssel Ki verwendet. Mit einem Verschlüsselungsschlüssel Kc, der in der SIM-Karte erzeugt und an das Mobiltelefon übertragen wird, werden Daten, die über die Mobilfunkverbindung übertragen werden sollen, im Mobiltelefon verschlüsselt. Die SIM-Karte enthält zudem individuelle Daten, durch die die SIM-Karte und damit der Mobilfunkinhaber identifiziert ist. In Mobilfunksystemen sind somit durch das Sicherheitsmodul, z.B. die SIM-Karte, Authentizität der Teilnehmer und Vertraulichkeit der übertragenen Daten gewährleistet.

DE 103 55 418 A1 offenbart ein Sicherheitsmodul zum Verschlüsseln von Sprachdaten in einem heterogenen Netzwerk, zwischen einem ersten Kommunikationsendgerät (z.B. VoIP-Telefon) und einem zweiten Telekommunikationsendgerät (z.B. TDM-Telefon). Schlüssel werden mittels eines Schlüssel-Austausch-Protokolls wie z.B. MIKEY (Multimedia Internet Keying) ausgetauscht. Das Sicherheitsmodul, das als Modem gestaltet ist, lässt sich wahlweise in eine Verbindungsleitung an dem ersten Telekommunikationsendgerät (z.B. VoIP-Telefon) zwischenschalten oder alternativ als Modem in eine Verbindungsleitung an dem zweiten Telekommunikationsendgerät (z.B. TDM-Telefon). Nur wenn das Sicherheitsmodul zwischengeschaltet ist, lassen sich Datenpakete für das paketorientierte Datennetz in Sprachsignale für das Telefonnetz umwandeln und - umgekehrt - Sprachsignale in Datenpakete umwandeln.

DE 103 41873 A1 offenbart eine WLAN-Schnittstellenkarte mit einer Einheit zum Verbindungsaufbau mit einer integrierten Smartcard-Funktionalität (Authentisierungs- und/oder Identifikationsmodul). Die Smartcard-Funktionalität übernimmt beim Aufbau einer WLAN-Verbindung die Authentisierung und/oder Identifizierung der WLAN-Schnittstellenkarte für den Zugang zum WLAN-Netz. Die WLAN-Schnittstellenkarte enthält weiter ein VoIP-Modul.

Der Erfindung liegt die Aufgabe zu Grunde, den Datenverkehr bei einer VoIP-Verbindung sicherer zu machen. Genauer liegt der Erfindung die Aufgabe zu Grunde, ein sicheres und vorzugsweise zugleich komfortables Verfahren zur Durchführung kryptographischer Berechnungen für die Authentisierung und/oder die Erzeugung und/oder den Austausch von Schlüsseln, die für eine anschließende Verschlüsselung von Daten vorgesehen sind, für eine VoIP-Verbindung zu schaffen.

Die Aufgabe wird gelöst durch ein Verfahren nach dem unabhängigen Verfahrensanspruch. Vorteilhafte Ausgestaltungen der Erfindung sind in den abhängigen Ansprüchen angegeben.

Bei dem erfindungsgemäßen Verfahren gemäß dem unabhängigen Anspruch 1 wird:
a) eine VoIP-Verbindung zwischen mindestens zwei Teilnehmern aufgebaut,
b) zumindest ein Teil eines Schlüsselverwaltungsprotokolls (MIKEY; ZRTP) durchgeführt, das mindestens eine kryptographische Berechnung für die gegenseitige Authentisierung der Teilnehmer und/ oder die Erzeugung und/ oder den Austausch von Schlüsseln zwischen den Teilnehmern vorsieht, und
c) die kryptographische Berechnung zumindest teilweise in einem mit einem Mikroprozessor-Chip ausgestatteten Sicherheitsmodul durchgeführt.

Dadurch, dass die kryptographische Berechnung in einem mit einem Mikroprozessor-Chip ausgestatteten Sicherheitsmodul durchgeführt wird, ist die kryptographische Berechnung vor Angriffen aus einem IP-basierten Netzwerk, in dem die VoIP-Verbindung aufgebaut und unterhalten wird, geschützt. Folglich ist die Authentizität der Teilnehmer mit erhöhter Sicherheit gewährleistet und/oder die Transportschlüssel für eine nachfolgende Datenverschlüsselung sind besser abgesichert als nach dem Stand der Technik.

Daher ist gemäß Anspruch 1 ein Verfahren geschaffen, das den Datenverkehr bei einer VoIP-Verbindung sicherer macht.

Die Erfindung hat den weiteren Vorteil, dass für die VoIP-Verbindung eine herkömmliche IP-Netzwerk-Infrastrukur ohne Anpassungen auf Protokollebenen des IP-Netzwerks verwendet werden kann. Denn zu dem Zeitpunkt, zu dem im Sicherheitsmodul kryptographische Berechnungen durchgeführt werden, ist die VoIP-Verbindung und damit insbesondere die zu Grunde liegende IP-Verbindung bereits hergestellt. Die Authentisierung bzw. der Schlüsselaustausch bei der Durchführung des Schlüsselverwaltungsprotokolls ist also vom Aufbau der VoIP-Verbindung zwischen den Teilnehmern, insbesondere von einer eventuellen Authentisierung bzw. einem Schlüsselaustausch bei der Einwahl in das IP-basierte Netzwerk, entkoppelt. Folglich können die Protokolle zur Einwahl in das IP-basierte Netzwerk unverändert bleiben. Folglich ist das erfindungsgemäße Verfahren sehr komfortabel.

Wahlweise wird die kryptographische Berechnung vollständig in dem mit einem Mikroprozessor-Chip ausgestatteten Sicherheitsmodul durchgeführt. Wahlweise wird jede kryptographische Berechnung für die gegenseitige Authentisierung der Teilnehmer und/ oder die Erzeugung und/ oder den Austausch von Schlüsseln zwischen den Teilnehmern im Sicherheitsmodul durchgeführt.

Das Sicherheitsmodul ist wahlweise in ein Endgerät für VoIP-Verbindungen fest oder entfernbar implementiert. Wahlweise ist das Sicherheitsmodul als aus dem Endgerät entfernbarer tragbarer Datenträger gestaltet, beispielsweise Mikroprozessor-Chipkarte oder Mikroprozessor-Token, optional mit USB-Anschluss, oder sonstiges "Embedded System" mit Körper und darin eingebettetem Mikroprozessorchip. Alternativ ist das Sicherheitsmodul fest implementierbar gestaltet ähnlich wie ein TPM (Trusted Platform) - Modul.

Das Sicherheitsmodul kann insbesondere zum Einstecken in einen Kartenleser eines Telefons oder in einen Kartenleser eines Computers (z.B. PCs) mit einem Softphone gestaltet sein. Alternativ ist das Sicherheitsmodul in ein Telefon oder einen Computer (z.B. PCs) mit einem Softphone fest integriert.

Wahlweise sind Eingangsdaten, die in die kryptographische Berechnung eingehen, in dem Sicherheitsmodul abgespeichert. Wahlweise sind die im Sicherheitsmodul abgespeicherten Eingangsdaten nur für innerhalb des Sicherheitsmoduls durchgeführte Teile der kryptographischen Berechnung zugänglich.

Die im Sicherheitsmodul abgespeicherten Eingangsdaten können beispielsweise eines oder mehrere der folgenden Daten umfassen: vorab zwischen Teilnehmern an der VoIP-Verbindung vereinbarte geheime Daten (sogenannte "shared secrets"), die in die Berechnung von Transportschlüsseln für die spätere Verschlüsselung von z.B. Sprachdaten, Videodaten und/oder sonstigen Mediendaten eingehen; Erzeugungsschlüssel, aus denen Transportschlüssel erzeugt werden können; Transportschlüssel; Identitätsdaten eines Teilnehmers.

Schlüssel, die erzeugt und/ oder ausgetauscht werden sollen, können insbesondere sein: Transportschlüssel zum späteren Verschlüsseln von Daten; Generierungsschlüssel, aus denen sich Transportschlüssel mittels kryptographischer Berechnungen ableiten lassen.

Wahlweise wird als Schlüsselverwaltungsprotokoll für die gegenseitige Authentisierung der Teilnehmer und/oder den Austausch von Schlüsseln MIKEY oder ZRTP verwendet. Der Austausch von Schlüsseln erfolgt insbesondere wahlweise nach einem der in MIKEY genannten drei alternativen Verfahren: Verfahren mit vorab vereinbartem Geheimnis ("pre-shared key"), Verfahren der Verschlüsselung mit öffentlichem Schlüssel ("public-key encryption"), Verfahren des Schlüsselaustauschs nach Diffie-Hellman ("Diffie-Hellman key exchange"). Als Eingangsdaten sind entsprechend im Sicherheitsmodul abgespeichert und gehen in kryptographische Berechnungen ein beispielsweise: das vorab vereinbarte Geheimnis s, der Generierungsschlüssel TGK, ein oder mehrere Diffie-Hellman (DH)-Schlüssel DHi ein oder mehrerer Teilnehmer i; Identitätsdaten IDi ein oder mehrerer Teilnehmer i. Als Ergebnis der kryptographischen Berechnung wird beispielsweise berechnet: die auszutauschende Nachricht KEMAC mit dem verschlüsselten TGK, die Signatur SIGNi, der Transportschlüssel TEK, die Prüfsumme MAC (Message Authentication Code) über z.B. die auszutauschende Nachricht oder über Teile davon und/ oder über zusätzliche Daten.

Wahlweise wird das Schlüsselverwaltungsprotokoll durch das Endgerät gesteuert. Wahlweise wird die kryptographische Berechnung an das Sicherheitsmodul delegiert. Wahlweise wird die kryptographische Berechnung durch das Endgerät an das Sicherheitsmodul delegiert, während das Endgerät das Schlüsselverwaltungsprotokoll abarbeitet. In diesem Fall überprüft das Endgerät das Schlüsselverwaltungsprotokoll auf durchzuführende kryptographische Berechnungen und delegiert sie an das Sicherheitsmodul.

Alternativ wird das Schlüsselverwaltungsprotokoll durch das Sicherheitsmodul gesteuert. Wahlweise übt das Sicherheitsmodul die Funktion eines für das Endgerät transparenten Verbindungs-Servers aus, z.B. eines PROXIES oder eines GATEKEEPERS, der das Schlüsselverwaltungsprotokoll während dessen Durchführung auf durchzuführende kryptographische Berechnungen hin überprüft und vorzugsweise bei der Überprüfung ermittelte durchzuführende kryptographische Berechnungen an sich selbst, nämlich das Sicherheitsmodul, delegiert.

Im Folgenden wird die Erfindung an Hand von Ausführungsbeispielen und unter Bezugnahme auf die Zeichnung näher erläutert, in der zeigen:
- Fig.1: ein beispielhaftes Szenario einer VoIP-Verbindung, gemäß einer Ausführungsform der Erfindung;
- Fig. 2: ein Ablaufschema zur Veranschaulichung des erfindungsgemäßen Verfahrens bei der Ausführungsform aus Fig.1.

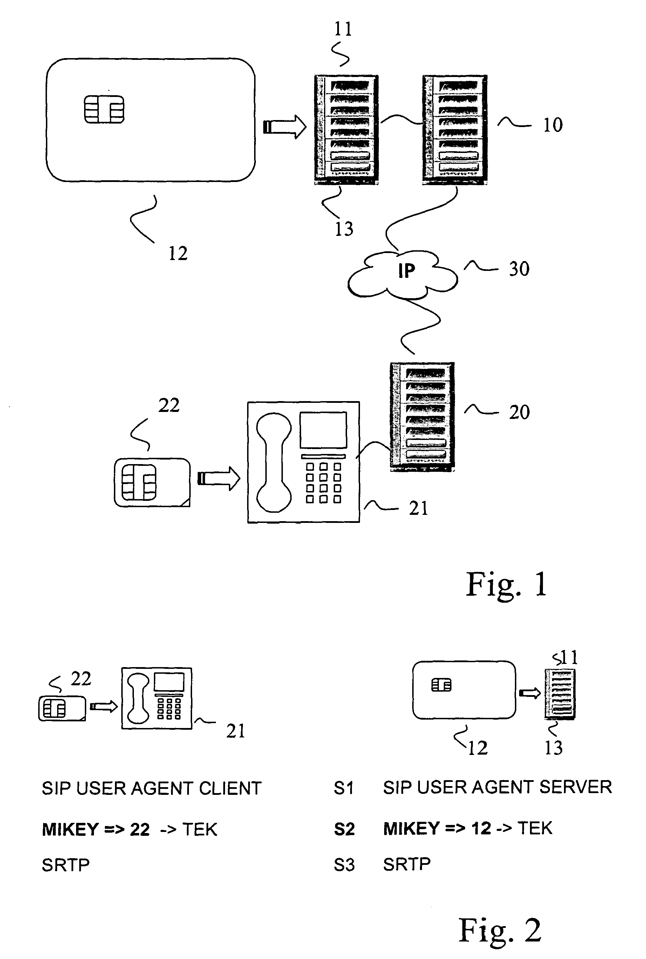

Fig. 1 zeigt ein beispielhaftes Szenario einer VoIP-Verbindung, gemäß einer Ausführungsform der Erfindung. Beteiligt an der VoIP-Verbindung sind ein erster Proxy-Server 10, ein zweiter Proxy-Server 20, ein IP-Netzwerk 30, ein erstes Endgerät 11, ein PC (Personal Computer) 13, ein zweites Endgerät 21, ein erstes Sicherheitsmodul 12 und ein zweites Sicherheitsmodul 22. Das erste Endgerät 11 ist als Softphone gestaltet, das als Software-Anwendung in einen PC 13 integriert ist. Das zweite Endgerät 21 ist als VoIP-fähiges Festnetztelefon gestaltet, das auf beliebige Weise mit dem zweiten Proxy-Server 20 verbunden werden kann. Das IP-Netzwerk 30 kann in an sich bekannter Weise ein oder mehrere verschiedene Komponenten wie z.B. weitere Server, drahtgebundene Verbindungen zwischen Servern, drahtlose Verbindungen zwischen Computern und/ oder weitere Komponenten aufweisen, die in Fig. 1 nicht im Einzelnen dargestellt sind.

Fig. 2 zeigt ein Ablaufschema zur Veranschaulichung des erfindungsgemäßen Verfahrens bei der Ausführungsform aus Fig.1. In einem ersten Schritt S1 wird zwischen dem ersten Endgerät 11 und dem zweiten Endgerät 21- über den ersten Proxy-Server 10, den zweiten Proxy-Server 20 und das IP-Netzwerk 30 (nicht dargestellt in Fig. 2) - in an sich bekannter Weise eine VoIP-Verbindung aufgebaut, wobei das Session Initiation Protocol SIP in an sich bekannter Weise abgearbeitet wird. Das erste Endgerät 11 ist als anrufender Teilnehmer an der VoIP-Verbindung beteiligt und arbeitet als USER AGENT CLIENT im SIP-Protokoll (vgl. z.B. SIP-Spezifikaüon). Das zweite Endgerät 21 ist als angerufener Teilnehmer an der VoIP-Verbindung beteiligt und arbeitet als USER AGENT SERVER im SIP-Protokoll. In einem zweiten Schritt S2 stehen beim ersten Endgerät 11 und beim zweiten Endgerät 21 jeweils kryptographische Berechnungen unter dem Schlüsselverwaltungsprotokoll MIKEY an. Schritt S2 besteht aus mehreren Unterschritten, die gemäß dem MIKEY-Protokoll teilweise abwechselnd beim ersten und zweiten Endgerät 11, 21 ablaufen. Jede kryptographische Berechnung zur Authentisierung und/ oder zu Schlüsseltausch und/ oder Schlüsselerzeugung beim ersten Endgerät 11 wird an das erste Sicherheitsmodul 12 delegiert und im ersten Sicherheitsmodul 12 ausgeführt. Nachdem das erste Sicherheitsmodul 12 alle erforderlichen kryptographischen Berechnungen durchgeführt hat, wird der Transportschlüssel TEK an das erste Endgerät 11 zur Verfügung gestellt. Jede kryptographische Berechnung zur Authentisierung und/ oder zu Schlüsseltausch und/ oder Schlüsselerzeugung beim zweiten Endgerät 21 wird an das zweite Sicherheitsmodul 22 delegiert und im zweiten Sicherheitsmodul 22 ausgeführt. Nachdem das zweite Sicherheitsmodul 22 alle erforderlichen kryptographischen Berechnungen durchgeführt hat, wird der Transportschlüssel TEK an das zweite Endgerät 21 zur Verfügung gestellt. In einem dritten Schritt S3 werden in an sich bekannter Weise mit dem Transportschlüssel TEK Daten verschlüsselt und gemäß SRTP zwischen den Endgeräten 11, 21 übertragen.

Im Beispiel aus Fig.1 und Fig. 2 sind zwei Endgeräte an der VoIP-Verbindung beteiligt, die demnach einer peer-to-peer-Verbindung gemäß VoIP entspricht (vgl. z.B. BSI-Studie oder NIST-Studie). An VoIP-Verbindungen mit mehr als zwei Teilnehmern sind beispielsweise mehrere Anrufer (anrufende Teilnehmer, z.B. USER AGENT CLIENTs) und/oder mehrere Angerufene (angerufene Teilnehmer, z.B. USER AGENT SERVER) gemäß SIP beteiligt.

## Patentansprüche

1. Verfahren zum Durchführen kryptographischer Berechnungen für Teilnehmer einer VoIP-Verbindung, wobei
a) die VoIP-Verbindung aufgebaut wird,
b) zumindest ein Teil eines Schlüsselverwaltungsprotokolls durchgeführt wird, das mindestens eine kryptographische Berechnung für die gegenseitige Authentisierung der Teilnehmer und/ oder die Erzeugung und/ oder den Austausch von Schlüsseln zwischen den Teilnehmern vorsieht, und
c) die kryptographische Berechnung zumindest teilweise in einem mit einem Mikroprozessor-Chip ausgestatteten Sicherheitsmodul (12; 22) durchgeführt wird.

2. Verfahren nach Anspruch 1, wobei das Sicherheitsmodul (12; 22) in ein Endgerät (11; 21) für VoIP-Verbindungen fest oder entfernbar implementierbar ist.

3. Verfahren nach Anspruch 2, wobei das Sicherheitsmodul (12; 22) als aus dem Endgerät (11; 21) entfernbarer tragbarer Datenträger gestaltet ist.

4. Verfahren nach einem der Ansprüche 1 bis 3, wobei Eingangsdaten, die in die kryptographische Berechnung eingehen, in dem Sicherheitsmodul (12; 22) abgespeichert sind.

5. Verfahren nach Anspruch 4, wobei die im Sicherheitsmodul (12; 22) abgespeicherten Eingangsdaten nur für innerhalb des Sicherheitsmoduls durchgeführte Teile der kryptographischen Berechnung zugänglich sind.

6. Verfahren nach einem der Ansprüche 1 bis 5, wobei als Schlüsselverwaltungsprotokoll MIKEY oder ZRTP verwendet wird.

7. Verfahren nach einem der Ansprüche 1 bis 6, wobei das Schlüsselverwaltungsprotokoll durch das Endgerät (11; 21) gesteuert wird.

8. Verfahren nach einem der Ansprüche 1 bis 6, wobei das Schlüsselverwaltungsprotokoll durch das Sicherheitsmodul (11; 21) gesteuert wird.

9. Verfahren nach Anspruch 8, wobei das Sicherheitsmodul (12; 22) die Funktion eines für das Endgerät (11; 21) transparenten Verbindungs-Servers (PROXY, GATEKEEPER) ausübt, der das Schlüsselverwaltungsprotokoll während dessen Durchführung auf mindestens eine durchzuführende kryptographische Berechnung hin überprüft.

10. Verfahren nach einem der Ansprüche 1 bis 9, wobei die kryptographische Berechnung an das Sicherheitsmodul (12; 22) delegiert wird.

11. Verfahren nach einem der Ansprüche 1 bis 10, zum Durchführen von kryptographischen Berechnungen in der Signalisierungsphase der VoIP-Verbindung.

12. Verfahren nach einem der Ansprüche 1 bis 11, wobei als Ausgangsdaten zumindest eines Teils der kryptographischen Berechnung mindestens ein Transportschlüssel erzeugt und/ oder ausgetauscht und/ oder bereitgestellt wird.

13. Verfahren nach Anspruch 12, wobei der erzeugte und/ oder ausgetauschte und/oder bereitgestellte Transportschlüssel dem Endgerät (11; 21) zum Verschlüsseln von Daten, die über die VoIP-Verbindung übermittelt werden sollen, zur Verfügung gestellt wird.
